# EUROPÄISCHE PATENTSCHRIFT

(11) **EP 3 844 375 B1**
(45) Veröffentlichungstag und Bekanntmachung des Hinweises auf die Patenterteilung: **03.05.2023**
(21) Anmeldenummer: 19725708.2
(22) Anmeldetag: 20.05.2019
(51) Int. Cl.: F02B 37/18, F16K 39/02, F16K 1/46, F16K 31/06, F02B 37/16

(54) **VENTIL**
VALVE
SOUPAPE

(30) Priorität: 27.08.2018 DE 102018214458
(43) Veröffentlichungstag der Anmeldung: 07.07.2021
(73) Patentinhaber: Vitesco Technologies GmbH, 93055 Regensburg (DE)
(72) Erfinder: BONANNO, Rosario, 65824 Schwalbach (DE)
(74) Vertreter: Vitesco Technologies
(86) Internationale Anmeldenummer: PCT/EP2019/062934
(87) Internationale Veröffentlichungsnummer: WO 2020/043330

(56) Entgegenhaltungen:
- WO-A1-2018/114525
- WO-A1-2019/121305
- CN-U- 204 611 049
- DE-A1-102008 031 738

## Beschreibung

Die vorliegende Erfindung betrifft ein Ventil zum Blockieren und Freigeben eines Fließwegs, das mittels einer elektromagnetischen Aktuatoreinheit betätigbar ist.

Derartige Ventile werden beispielsweise als Schubumluftventile am Turbolader in Kraftfahrzeugen eingesetzt, um im Schubbetrieb einen Bypass zur Ansaugseite freizugeben. Um ein zu starkes Abbremsen der Turbine des Turboladers bei niedrigen Drehzahlen zu verhindern, aber auch um ein schnelles Anfahren zu gewährleisten, werden schnelle Öffnungs- und Schließvorgänge des Ventils angestrebt. Insbesondere wird angestrebt, beim Schließvorgang ein sehr schnelles Verschließen durch das Anlegen des Verschlusskörpers an einen Ventilsitz zu erzielen. Der Ventilsitz wird von dem Gehäuse des Turboladers gebildet, an dem das Ventil angeflanscht wird. Darüber hinaus muss der axial verschiebliche Verschlusskörper gegen das Gehäuse abgedichtet sein. Hierzu ist es beispielsweise bekannt, in dem Gehäuse eine v-förmige Dichtung anzuordnen, deren Schenkel jeweils am Gehäuse und an der Mantelfläche des topfförmigen Verschlusskörpers anliegen. Durch die Vorspannung der beiden Schenkel wird die Dichtwirkung erzielt. Nachteilig hierbei ist, dass die am Verschlusskörper anliegende Dichtlippe des einen Schenkels infolge der Bewegung des Verschlusskörpers beim Öffnen und Schließen Reibung ausgesetzt ist, was einen erhöhten Verschleiß zur Folge hat. DE102008031738A1 offenbart ein Ventil des Stands der Technik nach dem Oberbegriff von Anspruch 1.

Der Erfindung liegt daher die Aufgabe zugrunde, ein Ventil mit verbesserter Dichtungsfunktion zu schaffen.

Diese Aufgabe wird durch den Gegenstand des unabhängigen Anspruchs gelöst. Vorteilhafte Weiterbildungen ergeben sich aus den abhängigen Ansprüchen.

Gemäß einem Aspekt der Erfindung wird ein Ventil zum Blockieren und Freigeben eines Fließwegs angegeben, wobei das Ventil eine elektromagnetische Aktuatoreinheit und einen mittels der elektromagnetischen Aktuatoreinheit axial bewegbaren Stift sowie einen mit dem Stift verbundenen Verschlusskörper aufweist, wobei der Verschlusskörper zum Blockieren und Freigeben eines Fließwegs ausgebildet ist und ein erstes axiales Ende aufweist, das von dem Fließweg entfernt angeordnet und mit dem Stift verbunden ist, sowie ein zweites axiales Ende, das in dem Fließweg anordenbar ist.

Ferner weist das Ventil ein zumindest den Stift und das erste axiale Ende des Verschlusskörpers aufnehmendes Gehäuse auf, wobei der Verschlusskörper mittels zumindest einer Dichtung gegen das Gehäuse abgedichtet ist.

Der Verschlusskörper weist zumindest im Bereich seines ersten axialen Endes eine radial umlaufende Dichtung mit einer nach außen auskragenden Dichtlippe auf, wobei die Dichtlippe in einem Schließzustand des Ventils an einem Bereich des Gehäuses dichtend anliegt und zumindest eine radial umlaufende Sicke aufweist.

Dabei wird hier und im Folgenden unter einem Schließzustand des Ventils der Schaltzustand des Ventils verstanden, in dem der Verschlusskörper den Fließweg blockiert.

Unter einer nach außen auskragenden Dichtlippe wird hier und im Folgenden eine Dichtlippe verstanden, die sich zumindest auch nach außen erstreckt. Insbesondere wird darunter auch eine Dichtlippe verstanden, die sich schräg nach oben-außen erstreckt, d.h. sowohl radial nach außen als auch in Richtung des Stifts.

Unter einer Sicke wird dabei hier und im Folgenden eine rinnnenförmige Ausformung der Dichtlippe verstanden, innerhalb der die Dichtlippe im Wesentlichen die gleiche Wandstärke aufweist wie in der Umgebung der Sicke. Wenn die Dichtlippe aus einem Kunststoffmaterial ausgebildet ist, kann die Sicke beispielsweise in einem Spitzgussprozess ausgeformt sein.

Das Ventil hat den Vorteil, dass die Abdichtung des Verschlusskörpers gegen das Gehäuse auf einen Zeitraum beschränkt wird, in der sich der Verschlusskörper in der Schließstellung befindet einschließlich eines Zeitraums unmittelbar bevor der Verschlusskörper zur Ruhe kommt. Die dem Verschlusskörper zugeordnete Dichtung ist somit nicht ständig in reibendem Kontakt mit dem Gehäuse, sondern erst in der Schließstellung und unmittelbar davor, sodass nahezu keine Reibung zwischen der Dichtung und dem Gehäuse auftritt. Somit wird auch der auftretende Verschleiß gering gehalten.

Die Dichtwirkung tritt insbesondere dadurch ein, dass die Dichtlippe in einem Schließzustand des Ventils an einem Bereich des Gehäuses dichtend anliegt. Die nach außen auskragende Dichtlippe ist besonders flexibel ausgebildet dadurch, dass eine radial umlaufende Sicke vorgesehen ist, die die Flexibilität der Dichtlippe erhöht.

Dadurch wird eine besonders gute Dichtwirkung erzielt, weil der Verschlusskörper unter dem Einfluss einer Federkraft in die Schließstellung gedrückt wird und sich die elastische Dichtlippe zur Erzielung einer zuverlässigen Dichtwirkung verformt. Dabei verbessert die Sicke die Verformbarkeit der Dichtlippe.

Gemäß einer Ausführungsform ist die Sicke in radialer Richtung zwischen einem Dichtungsbereich der Dichtung und dem Verschlusskörper angeordnet.

Unter dem Dichtungsbereich wird hier und im Folgenden der Bereich verstanden, in dem im Schließzustand des Ventils Kontakt zwischen der Dichtlippe und dem Gehäuse besteht. Dieser Bereich ist insbesondere als ringförmige Fläche ausgebildet.

Durch die Anordnung der Sicke zwischen dem ringförmigen Dichtungsbereich und dem Verschlusskörper wird die Flexibilität der Dichtlippe genau in dem Bereich erhöht, in dem sie zur Erzielung einer guten Dichtwirkung besonders vorteilhaft ist.

Gemäß einer Ausführungsform ist die Sicke im Längsschnitt halbkreisförmig und in Richtung des zweiten radialen Endes des Verschlusskörpers offen ausgebildet.

Die Sicke kann jedoch auch beispielsweise im Längsschnitt halboval oder unregelmäßig gekrümmt ausgebildet sein und in Richtung des ersten radialen Endes gekrümmt sein.

Es wäre auch denkbar, mehrere Sicken in der Dichtlippe vorzusehen, die den Verschlusskörper radial oder im Wesentlichen radial umlaufen, wobei auch verschiedene Geometrien der Sicken kombinierbar sind.

Insbesondere weist die Sicke eine Wandstärke d mit 0,4mm ≤ d ≤ 0,8mm auf.

Die Dichtlippe kann in einem Übergangsbereich zu der Sicke einen Krümmungsradius r aufweisen mit 0,5mm ≤ r ≤ 1,5mm.

Wie sich herausgestellt hat, ist eine derartige Geometrie der Dichtlippe mit einer Wandstärke der Sicke von mindestens 0,4mm und höchstens 0,8mm und mit Krümmungsradien von mindestens 0,5mm und höchstens 1,5mm im Übergangsbereich zur Dichtlippe besonders gut geeignet, um die gewünschte Flexibilität zu erzielen.

Der Verschlusskörper kann insbesondere topfförmig und nach oben offen ausgebildet sein und die Dichtung kann sowohl eine Außenseite als auch eine Innenseite einer Seitenwand des Verschlusskörpers bedecken. Die Dichtung kann auch zumindest Bereiche eines Bodens des Verschlusskörpers bedecken.

Dies hat den Vorteil, dass eine besonders sichere Verbindung zwischen dem Verschlusskörper und der Dichtung geschaffen wird, die einfach herzustellen ist, da die Dichtung in einem einzigen Arbeitsschritt mit dem Verschlusskörper verbunden werden kann. Dabei kann die Dichtung insbesondere auf den Verschlusskörper aufvulkanisiert werden. Dazu kann der Verschlusskörper beispielsweise in einer Gießform platziert und mit dem Material für die Dichtung umspritzt werden.

Die Dichtung kann insbesondere aus einem Gummi, insbesondere aus Fluorkautschuk, ausgebildet sein.

Bei dem Verschlusskörper handelt es sich insbesondere um ein Tiefziehteil, das beispielsweise aus einem Chrom-Nickel-Stahl ausgebildet ist. Ein derartiger Verschlusskörper weist eine hohe Beständigkeit gegenüber aggressiven Medien und hohen Temperaturen und demnach eine lange Lebensdauer auf.

Gemäß einem weiteren Aspekt der Erfindung wird ein Kraftfahrzeug mit einer Turboladereinrichtung angegeben, umfassend eine Ansaugseite mit einem Verdichter und eine Turbinenseite mit einer Turbine, wobei auf der Ansaugseite eine Bypassleitung zu dem Verdichter vorgesehen ist, wobei in der Bypassleitung das beschriebene Ventil zum Freigeben oder Blockieren der Bypassleitung angeordnet ist.

Gemäß diesem Aspekt wird demnach das beschriebene Ventil als Schubumluftventil an dem Turbolader eingesetzt. Durch die besonders flexibel ausgebildete Dichtlippe der Dichtung weist das Ventil eine verbesserte Dichtfunktion auf.

Ausführungsformen der Erfindung werden nun anhand der beigefügten Figuren näher erläutert.
- Figur 1: zeigt schematisch ein Schubumluftventil für einen Turbolader gemäß dem Stand der Technik;
- Figur 2: zeigt schematisch ein Ventil gemäß einer Ausführungsform der Erfindung im Längsschnitt und
- Figur 3: zeigt Details des Ventils gemäß Figur 2.

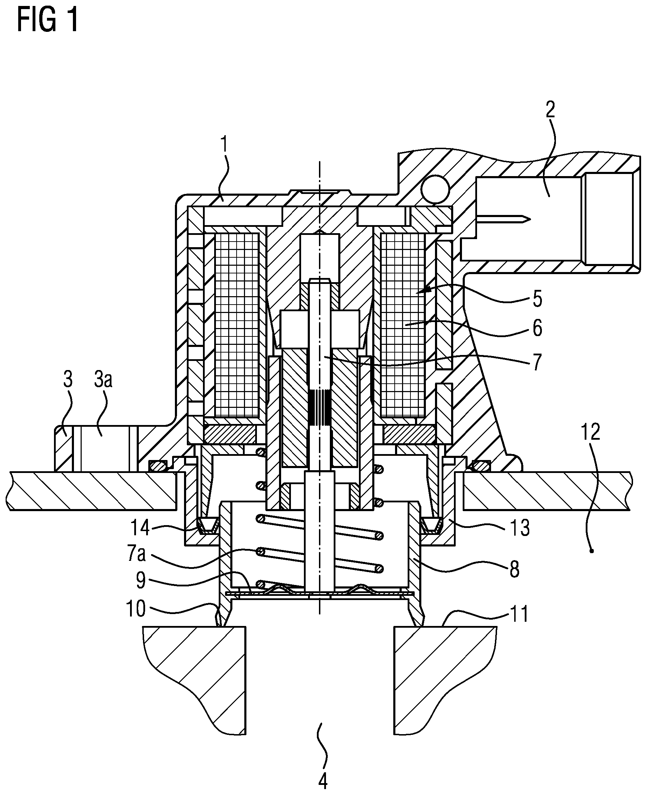

Figur 1 zeigt schematisch ein als Schubumluftventil ausgebildetes Ventil 1 für einen nicht gezeigten Turbolader eines Fahrzeugs, wie es aus dem Stand der Technik bekannt ist. Das Ventil 1 ist in Figur 1 wie in allen Figuren im Längsschnitt dargestellt, d.h. parallel zu einer Längsachse des Ventils geschnitten.

Das Ventil 1 umfasst ein Gehäuse 2 mit einem angeformten Flansch 3, welcher Bohrungen 3a aufweist, über die das Gehäuse 2 an den nicht gezeigten Turbolader im Bereich einer Bypassleitung 4 angeflanscht ist. In der gezeigten Einbaulage schließt sich an den Flansch 3 ein zweites Gehäuseteil 13 des Ventils 1 an.

In dem Gehäuse 2 ist eine elektromagnetische Aktuatoreinheit 5 mit einer Spule 6 und einem als Anker dienenden metallischen Stift 7 angeordnet. Der Stift 7 ist mit einem topfförmigen Verschlusskörper 8 fest verbunden. Der als Kolben dienende topfförmige Verschlusskörper 8 wirkt mit einem Ventilsitz 11 zusammen, um die Bypassleitung 4 zu blockieren oder freizugeben. Dazu weist der Verschlusskörper 8 eine ringförmige Dichtfläche 10 auf, die den Querschnitt der Bypassleitung 4 abdichten kann, sodass kein Medium zwischen der Leitung 4 und der Leitung 12 strömen kann. Eine Feder 7a drückt den Verschlusskörper 8 in Richtung Ventilsitz 11. Gegen die von der Feder 7a erzeugte Kraft von beispielsweise 3,5 N wirkt die aufgrund des Drucks in der Leitung 12 auf den Boden 9 des Verschlusskörpers 8 wirkende Kraft.

Der Verschlusskörper 8 ist gegen das zweite Gehäuseteil 13 mittels einer ringförmigen Dichtung 14 mit einem V-förmigen Profil abgedichtet.

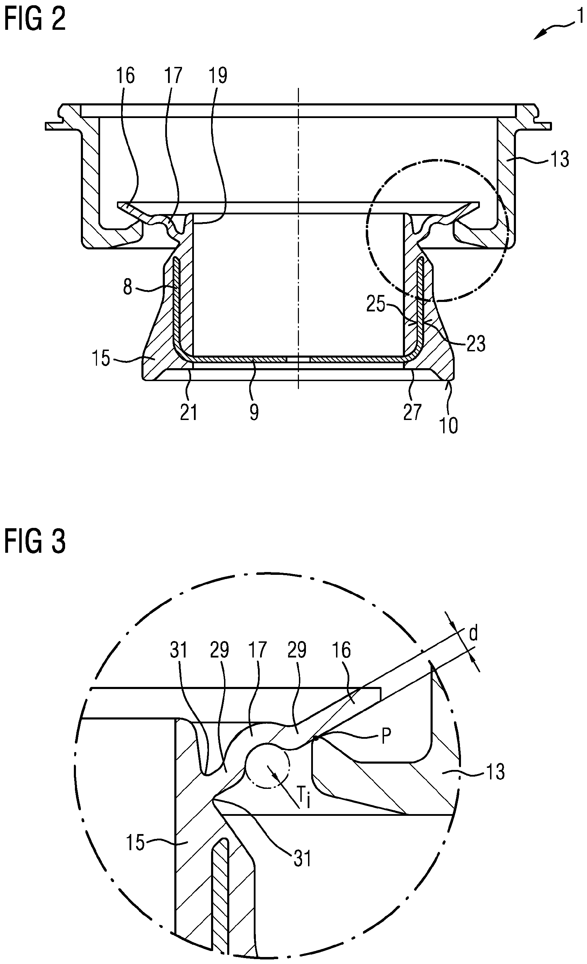

Figur 2 zeigt Teile eines Ventils 1 zum Blockieren und Freigeben eines Fließwegs gemäß einer Ausführungsform der Erfindung. Das in Figur 2 gezeigte Ventil 1 unterscheidet sich von dem in Figur 1 gezeigten, bekannten Ventil insbesondere durch die Ausbildung der Dichtung zwischen dem Verschlusskörper 8 und dem zweiten Gehäuseteil 13.

Das Ventil 1 gemäß Figur 2 weist an einem ersten axialen Ende 19 des Verschlusskörpers 8 eine radial umlaufende Dichtung 15 mit einer nach außen auskragenden Dichtlippe 16 auf. Die Dichtlippe 16 erstreckt sich dabei ausgehend von dem Verschlusskörper 8 radial nach außen und zumindest in der in Figur 2 gezeigten Schließstellung des Ventils 1 auch nach oben in Richtung des in Figur 2 nicht gezeigten Stifts 7. Die Dichtwirkung wird durch das Anliegen der elastischen Dichtlippe 16 an dem zweiten Gehäuseteil 13 erzielt.

Die Dichtlippe 16 weist eine radial umlaufende Sicke 17 auf, die eine besonders gute Elastizität der Dichtlippe 16 und somit eine besonders gute Dichtwirkung ermöglicht. Details zur Geometrie der Sicke 17 werden anhand von Figur 3 näher beschrieben.

Die Dichtung 15 ist nicht nur im Bereich des ersten axialen Endes 19 des Verschlusskörpers 8 angeordnet, sondern sie erstreckt sich sowohl auf einer Außenseite 23 als auch auf einer Innenseite 25 des topfförmigen Verschlusskörpers 8 bis zu dessen zweitem axialen Ende 21. In einem Randbereich 27 des Bodens 9 des topfförmigen Verschlusskörpers 8 umgreift die Dichtung 15 auf der Außenseite 23 den Verschlusskörper 8 geringfügig und bildet somit eine Hinterschneidung aus, durch die die Dichtung 15 besonders sicher am Verschlusskörper 8 befestigt ist. Zudem bildet die Dichtung 15 in diesem Bereich eine Dichtfläche 10 zur Abdichtung der Bypassleitung 4 aus.

Figur 3 zeigt Details der Dichtlippe 16 mit der radial umlaufenden Sicke 17.

Die Sicke 17 ist durch eine rinnenförmige Ausformung der Dichtlippe 16 gebildet, die eine Längsachse des Verschlusskörpers 8 konzentrisch umläuft. Die Sicke 17 ist demnach nicht als Vertiefung in der Dichtlippe 16 mit einer gegenüber dieser verringerten Wandstärke ausgebildet, sondern die Dichtlippe 16 ist im Bereich der Sicke 17 verformt, d.h. die Dichtlippe 16 weist über ihre gesamte Ausdehnung, also auch im Bereich der Sicke 17, im Wesentlichen dieselbe Wandstärke auf.

Im geschlossenen Zustand des Ventils 1 ist ein Kontaktbereich P zwischen der Dichtlippe 16 und dem zweiten Gehäuseteil 13 ausgebildet. Dieser Kontaktbereich P dient gleichzeitig als Dichtfläche oder Dichtungsbereich und als Angriffspunkt für eine Hebelkraft, die durch den Kontakt zwischen der Dichtlippe 16 und dem zweiten Gehäuseteil die Dichtlippe 16 nach oben biegt und somit verformt. Bei dem erfindungsgemäßen Ventil 1 ist die Verformbarkeit der Dichtlippe 16 besonders gut. Dies ist darauf zurückzuführen, dass die Dichtlippe 16 durch die Sicke 17 einen längeren Biegeweg erhält und daher durch dieselbe aufgebrachte Kraft, insbesondere die durch die Feder 7a aufgebrachte Kraft, stärker verformt wird. Es ist demnach möglich, das Ventil 1 durch das Aufbringen einer geringeren Kraft bei gleichbleibend guter Dichtwirkung zu schließen.

In der gezeigten Ausführungsform weist die Dichtlippe 16 über ihre gesamte Ausdehnung eine Wandstärke d von 6 mm auf. Der Krümmungsradius rᵢ auf der Innenseite der Sicke 17 beträgt 0,6 mm, auf der Außenseite beträgt er 1,2 mm. In Übergangsbereichen 29 von der Sicke 17 zu anderen Bereichen der Dichtlippe 16 beträgt der Krümmungsradius 0,5 mm auf der Innenseite und 1 mm auf der Außenseite der Krümmung. In der gezeigten Ausführungsform beträgt der Krümmungsradius in Übergangsbereichen 31 von der Dichtlippe 17 zu den übrigen Bereichen der Dichtung 15 0,25 mm.

In der gezeigten Ausführungsform weist die Sicke 17 in dem Längsschnitt eine Halbkreisform auf. Möglich wäre jedoch auch beispielsweise eine halbovale Form der Sicke 17.

## Patentansprüche

1. Ventil (1) zum Blockieren und Freigeben eines Fließwegs, aufweisend
- eine elektromagnetische Aktuatoreinheit (5);
- einen mittels der elektromagnetischen Aktuatoreinheit (5) axial bewegbaren Stift (7) und einen mit dem Stift (7) verbundenen Verschlusskörper (8), wobei der Verschlusskörper (8) zum Blockieren und Freigeben eines Fließwegs ausgebildet ist und ein erstes axiales Ende (19) aufweist, das von dem Fließweg entfernt angeordnet und mit dem Stift (7) verbunden ist, sowie ein zweites axiales Ende (21), das im Fließweg anordenbar ist,
- ein zumindest den Stift (7) und das erste axiale Ende (19) des Verschlusskörpers (8) aufnehmendes Gehäuse (2, 13) ;
wobei der Verschlusskörper (8) zumindest im Bereich seines ersten axialen Endes (19) eine radial umlaufende Dichtung (15) mit einer nach außen auskragenden Dichtlippe (16) aufweist, wobei die Dichtlippe (16) in einem Schließzustand des Ventils (1) an einem Bereich des Gehäuses (2, 13) dichtend anliegt, **dadurch gekennzeichnet, dass** die Dichtlippe (16) zumindest eine radial umlaufende Sicke (17) aufweist.

2. Ventil (1) nach Anspruch 1,
wobei die Sicke (17) in radialer Richtung zwischen einem Dichtungsbereich der Dichtung (16) und dem Verschlusskörper (8) angeordnet ist.

3. Ventil (1) nach Anspruch 1 oder 2,
wobei die Sicke (17) im Längsschnitt halbkreisförmig und in Richtung des zweiten radialen Endes (21) offen ausgebildet ist.

4. Ventil (1) nach Anspruch 1 oder 2,
wobei die Sicke (17) im Längsschnitt halboval ausgebildet ist.

5. Ventil (1) nach einem der Ansprüche 1 bis 4,
wobei die Sicke (17) eine Wandstärke d mit 0,4mm ≤ d ≤ 0,8mm aufweist.

6. Ventil (1) nach einem der Ansprüche 1 bis 5,
wobei die Dichtlippe (16) im Übergangsbereich zur Sicke (17) einen Krümmungsradius r aufweist mit 0,5mm ≤ r ≤ 1,5mm.

7. Ventil (1) nach einem der Ansprüche 1 bis 6,
wobei der Verschlusskörper (8) topfförmig und nach oben offen ausgebildet ist und die Dichtung (15) sowohl eine Außenseite (23) als auch eine Innenseite (25) einer Seitenwand des Verschlusskörpers (8) bedeckt.

8. Ventil (1) nach Anspruch 7,
wobei die Dichtung (15) ferner zumindest Bereiche eines Bodens (9) des Verschlusskörpers (8) bedeckt.

9. Ventil (1) nach einem der Ansprüche 1 bis 8,
wobei die Dichtung (15) aus einem Gummi, insbesondere aus Fluorkautschuk, ausgebildet ist.

10. Ventil (1) nach einem der Ansprüche 1 bis 9,
wobei der Verschlusskörper (8) als Tiefziehteil ausgebildet ist.

11. Kraftfahrzeug mit einer Turboladeeinrichtung, umfassend eine Ansaugseite mit einem Verdichter und eine Turbinenseite mit einer Turbine, wobei auf der Ansaugseite eine Bypassleitung (4) zu dem Verdichter vorgesehen ist, wobei in der Bypassleitung (4) ein Ventil (1) nach einem der Ansprüche 1 bis 10 zum Freigeben oder Blockieren der Bypassleitung (4) angeordnet ist.

## Claims

1. Valve (1) for blocking and releasing a flow path, having:
- an electromagnetic actuator unit (5);
- a pin (7) which can be axially moved by means of the electromagnetic actuator unit (5), and a closure element (8) which is connected to the pin (7), wherein the closure element (8) is designed to block and release a flow path and has a first axial end (19), which is arranged remotely from the flow path and is connected to the pin (7), and a second axial end (21) which can be arranged in the flow path,
- a housing (2, 13) which receives at least the pin (7) and the first axial end (19) of the closure element (8); wherein, at least in the region of its first axial end (19), the closure element (8) has a radially circumferential seal (15) with an outwardly protruding seal lip (16), wherein the seal lip (16) lies sealingly against a region of the housing (2, 13) in a closed state of the valve (1), **characterized in that** the seal lip (16) has at least one radially circumferential bead (17).

2. Valve (1) according to Claim 1,
wherein the bead (17) is arranged in the radial direction between a sealing region of the seal (16) and the closure element (8).

3. Valve (1) according to Claim 1 or 2,
wherein the bead (17) is semicircular in longitudinal section and is formed open in the direction of the second radial end (21).

4. Valve (1) according to Claim 1 or 2,
wherein the bead (17) is semi-oval in longitudinal section.

5. Valve (1) according to any of Claims 1 to 4,
wherein the bead (17) has a wall thickness d with 0.4mm ≤ d ≤ 0.8mm.

6. Valve (1) according to any of Claims 1 to 5,
wherein, in the transitional region to the bead (17), the seal lip (16) has a radius of curvature r with 0.5mm ≤ r ≤ 1.5mm.

7. Valve (1) according to any of Claims 1 to 6,
wherein the closure element (8) is formed pot-like and open at the top, and the seal (15) covers both an outside (23) and an inside (25) of a side wall of the closure element (8).

8. Valve (1) according to Claim 7,
wherein the seal (15) furthermore covers at least regions of a base (9) of the closure element (8).

9. Valve (1) according to any of Claims 1 to 8,
wherein the seal (15) is made of a rubber, in particular a fluoro-rubber.

10. Valve (1) according to any of Claims 1 to 9,
wherein the closure element (8) is formed as a deep-drawn part.

11. Motor vehicle with a turbocharger device comprising an intake side with a compressor and a turbine side with a turbine, wherein a bypass line (4) to the compressor is provided on the intake side, wherein a valve (1) according to any of Claims 1 to 10 is arranged in the bypass line (4) for releasing or blocking the bypass line (4) .

## Revendications

1. Soupape (1) pour bloquer et dégager une voie d'écoulement, présentant
- une unité d'actionneur électromagnétique (5) ;
- une tige (7) mobile axialement au moyen de l'unité d'actionneur électromagnétique (5) et un corps de fermeture (8) relié à la tige (7), le corps de fermeture (8) étant réalisé pour bloquer et dégager une voie d'écoulement et présentant une première extrémité axiale (19), qui est agencée éloignée du chemin d'écoulement et qui est reliée à la tige (7), ainsi qu'une deuxième extrémité axiale (21) qui peut être agencée dans le chemin d'écoulement,
- un boîtier (2, 13) recevant au moins la tige (7) et la première extrémité axiale (19) du corps de fermeture (8) ;
le corps de fermeture (8) présentant, au moins dans la zone de sa première extrémité axiale (19), un joint d'étanchéité périphérique radial (15) avec une lèvre d'étanchéité (16) faisant saillie vers l'extérieur, la lèvre d'étanchéité (16) s'appliquant de manière étanche contre une zone du boîtier (2, 13) dans un état de fermeture de la soupape (1), **caractérisée en ce que** la lèvre d'étanchéité (16) présente au moins une moulure périphérique radiale (17).

2. Soupape (1) selon la revendication 1, dans laquelle la moulure (17) est agencée dans la direction radiale entre une zone d'étanchéité du joint d'étanchéité (16) et le corps de fermeture (8).

3. Soupape (1) selon la revendication 1 ou 2, dans laquelle la moulure (17) est réalisée sous forme semi-circulaire en coupe longitudinale et sous forme ouverte en direction de la deuxième extrémité radiale (21).

4. Soupape (1) selon la revendication 1 ou 2, dans laquelle la moulure (17) est réalisée sous forme semi-ovale en coupe longitudinale.

5. Soupape (1) selon l'une quelconque des revendications 1 à 4, dans laquelle la moulure (17) présente une épaisseur de paroi d avec 0,4 mm ≤ d ≤ 0,8 mm.

6. Soupape (1) selon l'une quelconque des revendications 1 à 5, dans laquelle la lèvre d'étanchéité (16) présente dans la zone de transition vers la moulure (17) un rayon de courbure r avec 0,5 mm ≤ r ≤ 1,5 mm.

7. Soupape (1) selon l'une quelconque des revendications 1 à 6, dans laquelle le corps de fermeture (8) est réalisé en forme de pot et sous forme ouverte vers le haut et le joint d'étanchéité (15) recouvre aussi bien un côté extérieur (23) qu'un côté intérieur (25) d'une paroi latérale du corps de fermeture (8).

8. Soupape (1) selon la revendication 7, dans laquelle le joint d'étanchéité (15) recouvre en outre au moins des parties d'un fond (9) du corps de fermeture (8).

9. Soupape (1) selon l'une quelconque des revendications 1 à 8, dans laquelle le joint d'étanchéité (15) est réalisé en un caoutchouc, notamment en caoutchouc fluoré.

10. Soupape (1) selon l'une quelconque des revendications 1 à 9, dans laquelle le corps de fermeture (8) est réalisé sous forme de pièce emboutie.

11. Véhicule automobile avec un dispositif de turbocompression, comprenant un côté aspiration avec un compresseur et un côté turbine avec une turbine, une conduite de dérivation (4) vers le compresseur étant prévue sur le côté aspiration, une soupape (1) selon l'une quelconque des revendications 1 à 10 étant agencée dans la conduite de dérivation (4) pour dégager ou bloquer la conduite de dérivation (4).
